(19) Europäisches Patentamt
European Patent Office
Office européen des brevets

(11) **EP 1 697 443 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(51) Int Cl.:
**C08J 5/00** (2006.01)

(21) Anmeldenummer: **04804222.0**

(22) Anmeldetag: **22.12.2004**

(86) Internationale Anmeldenummer:
**PCT/EP2004/014627**

(87) Internationale Veröffentlichungsnummer:
**WO 2005/061594 (07.07.2005 Gazette 2005/27)**

(54) **BAKTERIENTRÄGERMATERIAL**

BACTERIA SUPPORT MATERIAL

MATERIAUX DE SUPPORT DE BACTERIES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.12.2003 DE 10360465**

(43) Veröffentlichungstag der Anmeldung:
**06.09.2006 Patentblatt 2006/36**

(73) Patentinhaber: **Pfleiderer water systems GmbH 92318 Neumarkt (DE)**

(72) Erfinder: **GIANGRASSO, Antonio 90469 Nürnberg (DE)**

(74) Vertreter: **HOFFMANN EITLE Patent- und Rechtsanwälte Arabellastrasse 4 81925 München (DE)**

(56) Entgegenhaltungen:
**WO-A-01/85644      US-A- 4 620 931**

- **ANONYMOUS: "newfloat/newpond HDPE-Schüttgut für Bakterienansiedlung" PFLEIDERER WATER SYSTEMS, [Online] XP002338444 Gefunden im Internet: URL:http://www.pfleiderer-water.com/defaul t.asp?V_DOC_ID=2408> [gefunden am 2005-07-29]**

**Beschreibung**

**Gebiet der Erfindung**

Die vorliegende Erfindung bezieht sich auf ein Verbundmaterial aus nichtmetallischen anorganischen Körnern und Kunststoffpartikeln, welches insbesondere geeignet ist als Trägermaterial für Bakterien. Ein bevorzugtes Anwendungsgebiet derartiger Trägermaterialien ist der Einsatz in den biologischen Stufen von Kläranlagen.

**Stand der Technik**

Bei den meisten heute in der Abwasserreinigung eingesetzten biologischen Verfahren wird in erster Linie die Fähigkeit von Mikroorganismen ausgenutzt, unter Sauerstoffverbrauch organische Schadstoffe zu oxidieren. Für das Betreiben von Kläranlagen ist daher die Bereitstellung eines Trägermaterials, welches Bakterien in Kläranlagen eine günstige Lebensgrundlage bietet, von großem Interesse. In diesem Zusammenhang ist es einerseits entscheidend, eine möglichst große Oberfläche bereit zu stellen, auf der sich die Bakterien ansiedeln können, während es andererseits von Vorteil ist, wenn das Trägermaterial eine spezifische Dichte aufweist, die der zu klärenden Flüssigkeit entspricht, sodass das Trägermaterial in der Flüssigkeit schwebt und durch die vorliegenden Strömungen umgewälzt werden kann. Ein weiteres Kriterium für einen vorteilhaften Bakterienträger ist das Vorliegen einer ausreichend glatten Oberfläche, welche es ermöglicht, dass der sich auf dem Trägermaterial bildende Schlamm einschließlich der abgesättigten Bakterien von Zeit zu Zeit von dem Träger abfallen kann und somit Raum für neues Bakterienwachstum und damit für die Regeneration der Kläreinheit schafft.

Als Trägermaterial für Bakterien bekannt ist die Verwendung von Lava und/oder Kieselsteinen im Festbettfilter. Diese Variante ist jedoch durch den Nachteil gekennzeichnet, dass der Träger schwerer als Wasser und somit nicht schwebefähig ist. Ein weiterer Nachteil ist, dass hohe Druckverluste auftreten. Ebenfalls unvorteilhaft für die Verwendung dieser Materialien als Bakterienträger in Kläranlagen ist, dass die Verschmutzungsproblematik in diesem Fall nicht zufriedenstellend gelöst wird, und dass derartige Trägermaterialien eine zu geringe Oberfläche aufweisen.

Weiterhin ist die Verwendung von Kunststoffträgern, insbesondere auf Formkörperbasis in Kläranlagen bekannt. Diese zeichnen sich jedoch durch eine geringe Oberfläche von maximal 600 $m^2/m^3$ aus, sowie durch ihre teilweise Neigung zum Aufschwimmen.

Es werden überdies auch Träger auf keramischer Basis eingesetzt, die jedoch ebenfalls nicht zufrieden stellen können, da sie einerseits nicht schwebefähig und andererseits in der Anschaffung zu teuer sind.

**Zusammenfassung der Erfindung**

Im Hinblick auf den obigen Stand der Technik liegt der vorliegenden Erfindung die Aufgabe zu Grunde, ein Trägermaterial für Bakterien zur Verwendung in Kläranlagen bereit zu stellen, welches eine hohe spezifische Oberfläche für die Ansiedelung von Bakterien aufweist, welches im wässrigen Medium der Kläranlage schwebefähig ist, und welches durch eine ausreichend glatte Oberfläche ein Abfallen von Schlamm und abgesättigten Bakterien während des Betriebs ermöglicht.

Diese Aufgabe wird erfindungsgemäß durch den Verbundwerkstoff gemäß Patentanspruch 1 gelöst. Bevorzugte Ausführungsformen dieses Verbundwerkstoffes sind in den abhängigen Ansprüchen 2 und 3 beschrieben.

Die vorliegende Erfindung bezieht sich weiterhin auf die Verwendung des erfindungsgemäßen Verbundwerkstoffes als Trägermaterial für Bakterien. Dieser Aspekt der vorliegenden Erfindung ist in den Patentansprüchen 4 bis 6 beschrieben.

Weiterhin bezieht sich die vorliegende Erfindung auch auf ein Verfahren zur Herstellung des erfindungsgemäßen Verbundmaterials. Dieses Verfahren ist in Patentansprüchen 7 und 8 beschrieben.

**Ausführliche Beschreibung der Erfindung**

1. Definitionen

1.1 Soweit nicht ausdrücklich vermerkt, verwendet die vorliegende Beschreibung die Begriffe "Pore", "porös" und "Porosität" im Sinne offener Porosität. Diese Begriffe beziehen sich also auf Poren, die von außen zugänglich sind.

1.2 Die "spezifische Oberfläche" wird über die Stickstoffadsorption nach der BET-Methode gemäß DIN 66131 bestimmt.

1.3 Die zugängliche (offene) "Porosität" wird anhand der Quecksilberporosimetrie nach DIN 66133 ermittelt.

1.4 Die "Korngröße" wird durch Siebanalyse nach DIN 53477 ermittelt.

1.5 Die "Porosität" ist definiert durch die Formel (I),

$$P = V \times 100\%/ (1/S + V) \qquad\qquad (I)$$

wobei P die Porosität [%] bezeichnet, S für die wahre Dichte [g/cm$^3$] und V für das spezifische Porenvolumen [cm$^3$/g] stehen.

1.7 Das "spezifische Porenvolumen" und die "Porengröße" werden mittels Quecksilberporosimetrie nach DIN 66133 ermittelt. Bei der Messung des spezifischen Porenvolumens nach der Quecksilberporosimetrie wird die in die Probe eingedrungene Menge an Quecksilber ermittelt und der dazu benötigte Druck. Mittels dieser Daten wird anhand der bekannten Kapillarkräfte des Quecksilbers das Porenvolumen und Porengröße bestimmt. Aufgrund dessen, dass das Quecksilber nur in zugängliche Poren eindringen kann wird auch nur die offene Porosität bei der Messung erfaßt.

1.8 Die "wahre Dichte" (Feststoffdichte) wird erhalten durch Messung nach DIN 66137-2

2. Nichtmetallisches anorganisches Material

Das in dem erfindungsgemäßen Verbundwerkstoff eingesetzte nichtmetallische anorganische Material hat die Aufgabe, eine ausreichend große Oberfläche für die Ansiedelung von Bakterien bereit zu stellen. Für die Eignung zur Ansiedelung von Bakterien ist neben der Größe der spezifischen Oberfläche auch deren Struktur entscheidend. Insbesondere ist es für die Ansiedelung von Bakterien bevorzugt, wenn das nichtmetallische anorganische Material von außen zugängliche Poren aufweist, die nicht zu klein sind, damit ein guter Materieaustausch mit dem umgebenden Medium gewährleistet ist.

Gemäß der Erfindung werden die obigen Anforderungen durch ein inertes Material gelöst, das die folgenden Charakteristika aufweist:

- eine spezifische Oberfläche von 10.000 bis 1.000.000 m$^2$/m$^3$,
- eine Porosität von 10 bis 80 %,
- Poren, von denen mindestens 50 % eine Porengröße zwischen 0,1 und 1000 $\mu$m aufweisen, und
- Körner, von denen mehr als 50 % eine Korngröße von 0,1 bis 50 mm zeigen.

Bevorzugt sind hierbei Materialien, deren spezifische Oberfläche 25.000 bis 500.000 m$^2$/m$^3$ beträgt. Besonders bevorzugt sind Materialien mit spezifischen Oberflächen von 100.000 bis 500.000 m$^2$/m$^3$. Ebenso werden vorteilhafterweise Materialien eingesetzt, bei denen mindestens 80 % der Poren in einem Größenbereich von 0,5 bis 100 $\mu$m, bevorzugt 5 bis 50 $\mu$m, liegen. Es ist ebenfalls bevorzugt, wenn 70 % des Materials eine Korngröße von 0,1 bis 50 mm, besonders bevorzugt 1 bis 20 mm, aufweisen. Bevorzugt ist überdies die Verwendung eines Materials, dessen (offene) Porosität 40 bis 80 %, besonders bevorzugt 50 bis 70%, beträgt.

Weiterhin zeichnet sich das nichtmetallische anorganische Material (wie auch der im folgenden beschriebene Kunststoff) dadurch aus, dass es in dem umgebenden Medium, in dem es als Trägermaterial für Bakterien eingesetzt wird (also typischerweise in einem wässrigen Medium), inert ist, also weder löslich ist noch chemische Reaktionen eingeht.

Die chemische Zusammensetzung des nichtmetallischen anorganischen Materials ist nicht näher festgelegt, solange es die oben genannten Anforderungen erfüllt. Die folgenden nichtmetallischen anorganischen Materialien können beispielsweise gemäß der vorliegenden Erfindung eingesetzt werden: Zeolithe, Aktivkohle, Tongranulate, poröse silikatische Materialien.

Ein besonders bevorzugtes Material ist in DE 100 22 798 offenbart.

Die Herstellung der gemäß der vorliegenden Erfindung einzusetzenden nichtmetallischen anorganischen Materialien erfolgt mittels konventioneller Techniken.

Geeignete Korngrößen des nichtmetallischen anorganischen Materials werden erhalten durch Mahlen und/ oder Sieben.

### 3. Kunststoffpartikel

Die gemäß der vorliegenden Erfindung einzusetzenden Kunststoffpartikel haben einerseits die Aufgabe, durch ihre Verbindung mit dem nichtmetallischen anorganischen Material eine spezifische Dichte des Verbundmaterials zu ermöglichen, die der des umgebenden Mediums entspricht, so dass das Verbundmaterial in diesem Medium schwebefähig ist.

Andererseits ermöglicht das Kunststoffmaterial durch die im Vergleich zu dem nichtmetallischen anorganischen Material glatte Oberfläche ein Ablösen von Schlamm und abgesättigten Bakterien von der Oberfläche des Verbundmaterials.

Um diese Aufgaben zu erfüllen ist es von Vorteil, wenn die Kunststoffpartikel eine spezifische Dichte von 0,6 bis 1,2 g/cm$^3$, bevorzugt 0,9 bis 1,1 g/cm$^3$, und eine spezifische Oberfläche von 50 bis 1000 m$^2$/m$^3$, bevorzugt 100 bis 500 m$^2$/m$^3$ aufweisen, und daß von den Kunststoffpartikeln mehr als 50 % eine Partikelgröße von 5 bis 100 mm, bevorzugt 8 bis 60 mm aufweisen.

Grundsätzlich ist jedes Kunststoffmaterial zur Verwendung gemäß der vorliegenden Erfindung geeignet, sofern sich aus diesem Material Partikel herstellen lassen, die die obigen Eigenschaften erfüllen. Typische zur Verwendung gemäß der vorliegenden Erfindung geeignete Kunststoffe sind PE (Polyethylen), PP (Polypropylen), PS (Polystyrol), PU (Polyurethan), ABS (Acrylonitril-Butadien-Styrol) und PVC (Polyvinylchlorid).

Die Form der Kunststoffpartikel ist nicht festgelegt, und es können kugel-, scheiben-, linsen- und würfelförmige Partikel eingesetzt werden, ebenso wie Mischformen und gänzlich unregelmäßige Partikel.

Die Größe und Form der Partikel wird durch den Herstellungsprozeß bestimmt.

### 4. Verbundmaterial

Ein wesentlicher Aspekt des Verbundmaterials ist das Vorliegen sowohl von Körnern des nichtmetallischen anorganischen Materials als auch von Kunststoffpartikeln. Das relative Gewichtsverhältnis dieser Bestandteile liegt typischerweise im Bereich von (nichtmetallisches anorganisches Material : Kunststoffpartikel) = 85:15 bis 15:85. Das genaue Gewichtsverhältnis der Bestandteile wird durch die gewünschte spezifische Dichte des Verbundmaterials, sowie durch die spezifischen Dichten der Bestandteile vorgegeben, und es kann durch den Fachmann leicht ermittelt werden.

Die gewünschte spezifische Dichte des Verbundmaterials ergibt sich bei Verwendung als Bakterienträgermaterial in Kläranlagen aus der spezifischen Dichte des Mediums in der Kläranlage. Im Hinblick auf die Schwebefähigkeit der Teilchen kann es von Vorteil sein, die spezifische Dichte des Verbundmaterials so zu wählen daß sie um nicht mehr als 20% von der spezifischen Dichte des Mediums abweicht. Stärker bevorzugt sind Verbundmaterialien, deren spezifische Dichten um nicht mehr als 10% von der des Mediums abweichen. Besonders bevorzugt sind Verbundmaterialien mit einer spezifischen Dichte, die im Bereich von $\pm$ 5% der spezifischen Dichte des Mediums liegt. Dies bedeutet beispielsweise für Medien mit einer spezifischen Dichte von 1 g/cm$^3$, daß die spezifische Dichte des Verbundmaterials bei 0,8 bis 1,2 g/cm$^3$, bevorzugt bei 0,9 bis 1,1 g/cm$^3$ und besonders bevorzugt bei 0,95 bis 1,05 g/cm$^3$ liegen sollte.

Die Bestandteile des Verbundmaterials sind vorteilhafterweise so miteinander verbunden, dass sie den bei deren Verwendung (z.B. beim Betrieb einer Kläranlage) auftretenden mechanischen Beanspruchungen standhalten. Die Art der Verbindung der Bestandteile ist nicht näher festgelegt und kann sowohl ein Verpressen unter Anschmelzen der Kunststoffpartikel, als auch ein Verkleben der Bestandteile umfassen.

Die räumliche Anordnung der Bestandteile innerhalb des Verbundmaterials ist ebenfalls nicht näher festgelegt. Somit können in dem erfindungsgemäßen Verbundmaterial neben Kontaktstellen zwischen Körnern nichtmetallischen anorganischen Materials und Kunststoffpartikeln, auch Kontaktstellen zwischen nichtmetallischen anorganischen Körnern untereinander und/oder zwischen Kunststoffpartikeln untereinander vorliegen.

Weiterhin ist es bevorzugt, daß die Bestandteile des Verbundmaterials so ausgewählt und miteinander verbunden werden, daß die spezifische Oberfläche des Verbundmaterials im Bereich von 500 bis 750.000 m$^2$/m$^3$, besonders bevorzugt bei 10.000 bis 700.000 m$^2$/m$^3$, liegt. Die Form und Größe der Teilchen des Verbundmaterials ist grundsätzlich nicht festgelegt. Als vorteilhaft haben sich jedoch scheibenförmige Teilchen mit einer kreisförmigen Grundfläche, einem Durchmesser von 1 bis 10 cm, bevorzugt 2 bis 6 cm, und einer Dicke von 2 bis 20 mm, bevorzugt 5 bis 10 mm, wobei diese scheibenförmigen Teilchen größere Hohlräume aufweisen können.

### 5. Verwendung des Verbundmaterials

Das erfindungsgemäße Verbundmaterial eignet sich insbesondere als Trägermaterial für Bakterien zur Verwendung in der biologischen Klärstufe von Kläranlagen. Es wird typischerweise in einer Menge eingesetzt, die 5 bis 50 Vol.%, bevorzugt 10 bis 40%, des Reaktionsbehältnisses entspricht.

Bei der Inbetriebnahme des Materials kann das Trägermaterial mit entsprechenden Bakterien angeimpft werden, dies ist jedoch nicht zwingend erforderlich.

Der Einsatz des erfindungsgemäßen Verbundmaterials ist jedoch nicht auf Kläranlagen beschränkt. Vielmehr eignet sich das Verbundmaterial als Träger für Bakterien für andere Anwendungen, wie beispielsweise Bioreaktoren in der chemischen Industrie, Fermentationsreaktoren in der Lebensmittelindustrie, etc. Bei derartigen Anwendungen kann es erforderlich sein, die einzusetzenden Bestandteile den vorliegenden Bedingungen and Anforderungen hinsichtlich Beständigkeit, spezifischer Dichte, Toxizität, etc. anzupassen. Diese Anpassung kann unschwer mit Hilfe von Routineversuchen und auf Grundlage des allgemeinen Fachwissens des einschlägigen Fachmanns erfolgen.

6. Herstellung des Verbundmaterials

Das erfindungsgemäße Verbundmaterial kann aus den Bestandteilen durch

(1) Mischen des nichtmetallischen anorganischen Materials mit den Kunststoffpartikeln;

(2) Abfüllen der Mischung in die dafür vorgesehene Form;

(3) Anschmelzen der Oberfläche der Kunststoffpartikel; und gegebenenfalls

(4) Zusammenpressen der angeschmolzenen Kunststoffpartikel mit den Körnern des nichtmetallischen anorganischen Materials;

hergestellt werden, wobei Schritt (4) entweder gleichzeitig mit Schritt (3) oder im Anschluss an Schritt (3) ausgeführt werden kann.

Das Anschmelzen in Schritt (3) erfolgt durch Erhitzen der Kunststoffpartikel auf eine Temperatur oberhalb des Schmelzpunktes des Kunststoffes über eine Zeitdauer von 5 bis 60 min. Bevorzugt sollte lediglich der Randbereich der Partikel angeschmolzen werden, so daß die Struktur und Form der Partikel durch deren Kern erhalten bleibt. Geringfügige Verformungen der Partikel sind jedoch nicht schädlich.

Das Herstellungsverfahren umfasst typischerweise das Mischen des nichtmetallisch anorganischen Materials mit dem Kunststoffmaterial, das Einfüllen in eine geeignete Sinterform und ggf. Verpressen. Anschließend erfolgt das Sintern der Mischung in der Sinteranlage nach einem vorgegebenen Sinterprogramm mit den Parametern Temperatur und Verweilzeit (VWZ). Während der Verweilzeit in der Sinteranlage erfolgt ein Zusammensintern der Kunststoffpartikel unter Einschluß des nichtmetallischen anorganischen Materials.

In einer bevorzugten Ausführungsform wird die Verbindung zwischen den Kunststoffpartikeln und dem nichtmetallischen anorganischen Material unter Verwendung eines Kunststoffpulvers erzielt. Das Kunststoffpulver kann zu einem beliebigen Zeitpunkt vor dem Anschmelzen zugegeben werden. Bevorzugte Korngrößen des Kunststoffpulvers sind im Bereich von 0,2 bis 1,5 mm, besonders bevorzugt im Bereich von 0,2 bis 1,0 mm. Auf Grund dieser geringen Korngrößen wird das Anschmelzen und somit die Verbindung der Bestandteile erleichtert. Das Kunststoffpulver fungiert somit als Vermittler.

Als Material für das Kunststoffpulver eignet sich das Material der Kunststoffpartikel, es können aber auch ähnliche Materialien eingesetzt werden. Unter "ähnlichen Materialien" sind in diesem Zusammenhang Materialien zu verstehen, die eine spezifische Dichte von 0,6 bis 1,2 $g/cm^3$, bevorzugt 0,9 bis 1,1 $g/cm^3$ aufweisen. Zudem sollte der Schmelzpunkt des Kunststoffpulvers dem der Kunststoffpartikel ähnlich sein. Bevorzugt sollte der Schmelzpunkt um nicht mehr als 10% über dem der Kunststoffpartikel und um nicht mehr als 30% unter dem der Kunststoffpartikel liegen.

Die günstigerweise einzusetzende Menge an Kunststoffpulver hängt von den übrigen verwendeten Materialien ab, und kann mittels einfacher Vorversuche ermittelt werden. In jedem Fall sollte die Menge an Kunststoffpulver vorteilhafterweise mindestens so hoch sein, daß ein Ablösen der Bestandteile von dem Verbundmaterial verhindert wird. Andererseits ist es nicht von Vorteil die relative Menge an Kunststoffpulver so weit zu erhöhen, daß die zur einfachen Bedeckung aller Oberflächen erforderliche Menge überschritten wird.

7. Beispiel

Es wurde ein Verbundmaterial hergestellt durch Verbinden eines keramischen Materials mit den folgenden Eigenschaften.

| | |
|---|---|
| Ausgangsmaterialien: | |
| Silikatisches Material | |
| Porengröße: | 0,1 bis 100 $\mu$m |
| Materialdichte: | 2,2 $g/cm^3$ |

(fortgesetzt)

| Ausgangsmaterialien: | |
| --- | --- |
| Silikatisches Material | |
| Porosität: | 60% |
| Oberfläche: | 350.000 m$^2$/m$^3$ |

| Kunststoffmaterial: | |
| --- | --- |
| HDPE | |
| Dichte: | 1,035 g/cm$^3$ |

| Kunststoffpulver: | |
| --- | --- |
| HDPE | |
| Dichte: | 0,951 g/cm$^3$ |
| Erweichungstemperatur: | 84°C (Vicat B50 nach ISO 306) |

| Prozeßtemperatur: | 230°C |
| --- | --- |
| VWZ: | 20 min |

| Spezifische Dichte: | ca. 1 g/cm$^3$ |
| --- | --- |
| Teilchengröße: | 20 bis 50 mm |
| Spezifische Oberfläche: | ca. 175.000 |

Das Verbundmaterial war in einem Kläranlagenmedium schwebefähig, und es ermöglichte die Ansiedelung von Bakterien. Bei einem Testbetrieb einer Kläranlage zeigte sich, dass der mit Bakterien besiedelte Träger gut regenerationsfähig war, da sich Bakterien und Schlamm von dem Träger wieder lösen ließen.

**Patentansprüche**

1.  Verbundmaterial mit einer spezifischen Dichte von 0,8 bis 1,2 g/cm$^3$, umfassend die folgenden Bestandteile:

    (a) ein oder mehrere Körner eines nichtmetallischen anorganischen Materials mit einer spezifischen Oberfläche von 10.000 bis 1.000.000 m$^2$/m$^3$, mit einer Porosität von 10 bis 80 %, mit Poren, von denen mindestens 50 % eine Porengröße zwischen 0,1 und 1000 $\mu$m aufweisen, wobei von den Körnern mehr als 50 % eine Korngröße von 0,1 bis 50 mm zeigen; und
    (b) einen oder mehrere Kunststoffpartikel mit einer spezifischen Dichte von 0,6 bis 1,2 g/cm$^3$, und einer spezifischen Oberfläche von 50 bis 1000 m$^2$/m$^3$, von denen mehr als 50 % eine Partikelgröße von 0,01 bis 100 mm aufweisen.

2.  Verbundmaterial gemäß Anspruch 1, wobei das nichtmetallische anorganische Material eine spezifische Oberfläche von 25.000 bis 500.000 m$^2$/m$^3$ aufweist.

3.  Verbundmaterial gemäß einem oder mehreren der Ansprüche 1 oder 2, wobei das Gewichtsverhältnis des nichtmetallischen anorganischen Materials zu den Kunststoffpartikeln bei 15:85 bis 85:15 liegt.

4.  Verwendung des Verbundmaterials gemäß einem oder mehreren der Ansprüche 1 bis 3 als Bakterienträgermaterial.

5.  Verwendung gemäß Anspruch 4 in Anlagen zur Wasseraufbereitung.

6.  Verwendung gemäß Anspruch 4 oder 5, wobei die spezifische Dichte des Verbundwerkstoffes der spezifischen Dichte des umgebenden Mediums entspricht.

7. Verfahren zur Herstellung des Verbundmaterials gemäß einem oder mehreren der Ansprüche 1 bis 3, umfassend die Schritte:

(1) Mischen des nichtmetallischen anorganischen Materials mit den Kunststoffpartikeln;
(2) Abfüllen der Mischung in eine Form;
(3) Anschmelzen der Oberfläche der Kunststoffpartikel; und gegebenenfalls
(4) Zusammenpressen der angeschmolzenen Kunststoffpartikel mit den Körnern des nichtmetallischen anorganischen Materials;

wobei Schritt (4) entweder gleichzeitig mit Schritt (3) oder im Anschluss an Schritt (3) ausgeführt werden kann.

8. Verfahren gemäß Anspruch 7, wobei vor Schritt (3) ein Kunststoffpulver aus einem dem Material der Kunststoffpartikel identischen oder ähnlichen Material zugegeben wird.

**Claims**

1. Composite material having a specific density of 0.8 to 1.2 g/cm$^3$, comprising the following constituents:

(a) one or more grains of a non-metallic inorganic material having a specific surface area of 10,000 to 1,000,000 m$^2$/m$^3$, having a porosity of 10 to 80%, having pores, of which at least 50% have a pore size between 0.1 and 1,000 $\mu$m, wherein more than 50% of the grains show a grain size of 0.1 to 50 mm; and
(b) one or more plastic particles having a specific density of 0.6 to 1.2 g/cm$^3$, and a specific surface area of 50 to 1,000 m$^2$/m$^3$, more than 50% of which have a particle size of 0.01 to 100 mm.

2. Composite material according to claim 1, wherein the non-metallic inorganic material has a specific surface area of 25,000 to 500,000 m$^2$/m$^3$.

3. Composite material according to one or more of claims 1 or 2, wherein the weight ratio of the non-metallic inorganic material to the plastic particles lies at 15:85 to 85:15.

4. Use of the composite material according to one or more of claims 1 to 3 as bacterial support material.

5. Use according to claim 4 in plants for water treatment.

6. Use according to claim 4 or 5, wherein the specific density of the composite material corresponds to the specific density of the surrounding medium.

7. Process for producing the composite material according to one or more of claims 1 to 3, comprising the steps:

(1) mixing the non-metallic inorganic material with the plastic particles;
(2) placing the mixture in a mould;
(3) partially melting the surface of the plastic particles; and optionally
(4) compressing the partially melted plastic particles with the grains of the non-metallic inorganic material;

wherein step (4) may be executed either simultaneously to step (3) or following step (3).

8. Process according to claim 7, wherein before step (3), a plastic powder made from a material which is identical or similar to the material of the plastic particles is added.

**Revendications**

1. Matériaux composite ayant une masse volumique spécifique de 0,8 à 1,2 g/cm$^3$, comprenant les constituants suivants :

(a) un ou plusieurs grains d'un matériau non organique, non métallique, ayant une surface spécifique de 10.000 à 1.000.000 m$^2$/m$^3$. avec une porosité de 10 à 80 %, avec des pores dont au moins 50 % présentent une taille de pores comprise entre 0,1 et 1.000 $\mu$m, sachant que plus de 50 % des grains présentent une taille de grain comprise dans la fourchette de 0,1 à 50 mm ; et

(b) une ou plusieurs particules de matière synthétique ayant une masse volumique spécifique de 0,6 à 1,2 g/cm$^3$ et une surface spécifique de 50 à 1.000 m$^2$/m$^3$, dont plus de 50 % présentent une taille de particules de 0,01 et 100 mm.

**2.** Matériau composite selon la revendication 1. le matériau non organique, non métallique, présentant une surface spécifique de 25.000 à 500.000 m$^2$/m$^3$.

**3.** Matériau composite selon l'une ou plusieurs des revendications 1 ou 2, le rapport de poids du matériau non organique, non métallique, par rapport aux particules de matière synthétique, étant dans la fourchette comprise entre 15:85 et 85:15.

**4.** Utilisation du matériau composite selon l'une ou plusieurs des revendications 1 à 3 en tant que matériau de support de bactéries,

**5.** Utilisation selon la revendication 4, dans des installations servant au traitement de préparation de l'eau.

**6.** Utilisation selon la revendication 4 ou 5, la masse volumique spécifique du matériau composite correspondant à la masse volumique spécifique du milieu environnant.

**7.** Procédé de préparation du matériau composite selon l'une ou plusieurs des revendications 1 à 3, comprenant les étapes consistant à :

(1) mélanger le matériau non organique, non métallique, aux particules de matière synthétique :
(2) couler le mélange dans un moule ,
(3) porter à fusion la surface des particules de matière synthétique ; et, le cas échéant.
(4) comprimer les particules de matière synthétique ayant été portées à fusion avec les grains du matériau non organique, non métallique :

sachant que l'étape (4) est effectuée, soit simultanément à l'étape (3), soit à la suite de l'étape (3).

**8.** Procédé selon la revendication 7, sachant que, avant l'étape (3), est ajoutée une poudre de matière synthétique composée d'un matériau identique ou analogue au matériau des particules de matière synthétique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022798